## Europäisches Patentamt
## European Patent Office
## Office européen des brevets

(19)

(11) Veröffentlichungsnummer : **0 065 093
B1**

(12) # EUROPÄISCHE PATENTSCHRIFT

(45) Veröffentlichungstag der Patentschrift :
09.10.85

(51) Int. Cl.⁴ : **G 02 B 6/38**

(21) Anmeldenummer : 82102488.2

(22) Anmeldetag : 25.03.82

(54) **Für Gestelleinschübe geeignete Koppelvorrichtung für in Steckerstifte gefasste Lichtwellenleiter.**

(30) Priorität : 16.05.81 DE 3119545

(43) Veröffentlichungstag der Anmeldung :
24.11.82 Patentblatt 82/47

(45) Bekanntmachung des Hinweises auf die Patenterteilung : 09.10.85 Patentblatt 85/41

(84) Benannte Vertragsstaaten :
FR GB IT NL

(56) Entgegenhaltungen :
EP-A- 0 043 422
DE-U- 7 817 996
DE-U- 8 018 008
GB-A- 2 010 527
IEEE JOURNAL OF QUANTUM ELECTRONICS, Band
QE-16, Nr. 6, Juni 1980, Seiten 618-627, New York,
USA, K. NAWATA: "Multimode and single-mode fiber
connectors technology"
SECOND INTERNATIONAL CONFERENCE ON TELE-
COMMUNICATION TRANSMISSION - INTO THE DIGI-
TAL ERA, 17.-20. März 1981, Seiten 213-215, I.E.E.,
London, G.B., G. LAMPE: "Optical transmission system for a 140 Mbit/S subscriber loop"

(73) Patentinhaber : Philips Kommunikations Industrie AG
Thurn-und-Taxis-Strasse 10
D-8500 Nürnberg 10 (DE)

(72) Erfinder : Schmidt, Bernhard
Rehfeld 8
D-5206 Neunkirchen (DE)

(74) Vertreter : Patentanwälte Dr. Solf & Zapf
Schlossbleiche 20 Postfach 13 01 13
D-5600 Wuppertal 1 (DE)

## Beschreibung

Die Erfindung betrifft eine Koppelvorrichtung für in Steckerstifte gefaßte Lichtwellenleiter (LWL), bestehend aus einem in einem Durchbruch eines Gerätegehäuses befestigten, mehrfach geschlitzten, Druckkörper enthaltenden Gehäuse für die Aufnahme der Steckerstifte mit wenigstens einer Schraubkappe, und einem, in einem Einschubrahmen befestigten Gegengehäuse mit einem darin verschiebbar angeordnetem Steckerstift.

Die zunehmende Anwendung der Opto-Elektronik für kommerzielle Zwecke, bei der Einzelgeräte vorwiegend steckbar als Einschübe in Einschub-Rahmen oder -Gestellen eingesetzt werden, verstärkt das Bedürfnis nach einfach steckbaren Verbindungen für LWL, um damit nach Lösung der Probleme mit elektrischen Verbindungen die Vorteile der Einschubtechnik voll ausnutzen zu können.

Bekannt ist eine Koppelvorrichtung für in Stecker gefaßte LWL mit einem hülsenförmigen, längs- und quergeschlitzten Klemmkörper und mit einem diesen Klemmkörper umgebenden Gehäuse, bei der der Klemmkörper im Bereich des Längsschlitzes mit parallel verlaufenden Ansätzen versehen ist, deren Abstand voneinander der Längsschlitzbreite entspricht, bei der einer der Ansätze durch den Querschlitz geteilt ist, bei der das Gehäuse eine der Kontur des Klemmkörpers entsprechende durchgehende Ausnehmung aufweist, die wenigstens im Bereich des geteilten Ansatzes eine in die Ausnehmung übergehende und mit der Länge der Ausnehmung übereinstimmende Aussparung zur Aufnahme von Druckkörpern besitzt, die über die Drehbewegung von an den Enden des Klemmkörpers befindlichen Schraubkappen gegen den Klemmkörper preßbar sind (DE-GM 79 35 570).

Diese Koppelvorrichtung ist für die Einschubtechnik nicht vorgesehen, ihre Verwendung würde nach dem Einschieben eines Gerätes die Einführung eines Steckers und seine Befestigung durch Drehen einer Schraubkappe erfordern.

Bekannt ist auch eine Weiterentwicklung, bei der das Gehäuse eine durchgehende, zylindrische zur Aufnahme von LWL-Enden geeignete Ausnehmung aufweist, ferner eine mit der Länge dieser Ausnehmung übereinstimmende, mittig getrennte Aussparung für Druckkörper, und bei der die Ausnehmung und die Aussparung durch einen mehrfach nach einer Seite gebogenen Schlitz verbunden sind (DE-GM 80 18 008).

Auch diese Koppelvorrichtung hätte für den genannten Einsatzfall die bereits genannten Nachteile.

Der Erfindung liegt die Aufgabe zugrunde, eine der genannten Koppelvorrichtungen so umzugestalten, daß sie ohne Verlust der äußerst präzisen Steckerführung die in der Einschubtechnik üblichen relativ großen Maßtoleranzen überbrücken kann, und daß sie sich durch einfaches Einschieben sicher verriegeln läßt. Ferner sollte die Vorrichtung den oft etwas rauhen Umgang mit Einschubgeräten ohne Schaden überstehen können.

Diese Aufgabe wird erfindungsgemäß dadurch gelöst, daß vor der aus dem Gerätegehäuse herausragenden Stirnfläche des Gehäuses innerhalb der Schraubkappe ein auf die Druckkörper einwirkender Druckring verschiebbar angeordnet ist, daß im Gegengehäuse eine Druckhülse federnd verschiebbar angeordnet ist, die beim Einschieben des Gerätegehäuses in den Einschubrahmen auf den Druckring trifft, und daß konzentrisch in der Druckhülse eine den Steckerstift aufnehmende Steckerhülse federnd verschiebbar angeordnet ist.

Die mit der Erfindung erreichbaren Vorteile bestehen insbesondere darin, daß durch die relativ große Beweglichkeit des im Einschubrahmen angeordneten Steckerstiftes alle vorkommenden Toleranzen in Einschub-Rahmen, -Gestellen und -Geräten überbrückt werden und die Steckerstifte dennoch im eingeschobenen Zustand absolut spielfrei miteinander verkoppelt sind. Ein weiterer Vorteil ist, daß auch bei Erschütterungen und sonstigen mechanischen Beanspruchungen keine Änderungen der Übertragungseigenschaften auftreten können.

In einer Ausgestaltung der Erfindung ist die Außenfläche des Druckringes für größtmögliche Bewegungsfreiheit in der Schraubkappe als Kugelzone geformt.

In einer weiteren Ausgestaltung sind die Spitze des Steckerstifes, der Eingang der Aufnahmeöffnung im Gehäuse, die Innenfläche des Druckringes und die Öffnung der Schraubkappe konisch geformt.

Diese Ausgestaltungen bieten insbesondere den Vorteil, daß auch bei etwas verkanteten Einsetzen des Einschubgerätes eine sichere und schadensfreie Einführung des Steckerstiftes erfolgt.

Eine weitere Ausgestaltung der Erfindung, bei der der Steckerstift in der Steckerhülse frei drehbar angeordnet ist, hat den Vorteil, daß alle Torsionsbeanspruchungen auf den LWL vermieden werden, die sonst beim Einbau des Gegengehäuses in den Einschubrahmen und beim Anziehen seiner Befestigungsmutter auftreten könnten.

Im Rahmen der Erfindung liegt es auch, die im Inneren des Gerätegehäuses liegende Einführungsbohrung im Gehäuse derart zu erweitern, daß sie ein optoelektrisches Sende- oder Empfangsbauteil aufnehmen kann. Damit läßt sich häufig die Zahl von Steckverbindungen und die damit verbundenen Verluste wesentlich vermindern.

Ein Ausführungsbeispiel der Erfindung ist in der Zeichnung dargestellt und wird im folgenden näher beschrieben. Es zeigen :

Figur 1 einen im Einschubgerät angeordneten Teil der Koppelvorrichtung,

Figur 2 einen im Einschubrahmen oder -Gestell befestigten Teil der Koppelvorrichtung,

Figur 3 die Teile der Koppelvorrichtung zusammengefügt,

Figur 4 einen im Einschubgerät angeordneten Teil mit optoelektronischem Bauteil.

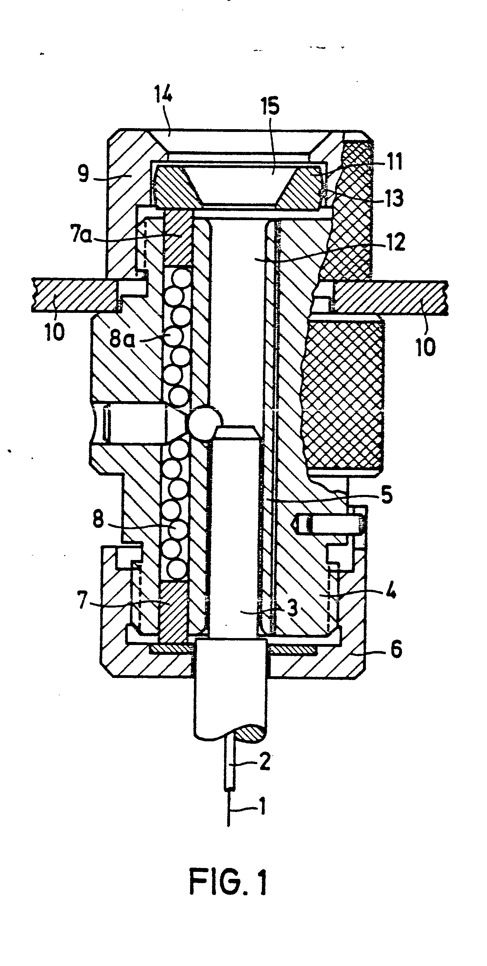

In Fig. 1 ist ein in einem Einschubgerät angeordnetes Teil der Koppelvorrichtung dargestellt. Es ist zur besseren Veranschaulichung in stark vergrößertem Maßstab und um 90° gedreht gegen die normale Gebrauchslage dargestellt. Eine aus dem Inneren des Gerätes kommende Lichtleitfaser 1 mit ihrem Kunststoffmantel 2 ist in einem Stecker 3 gefaßt, deren optisch einwandfreie Endfläche an der Spitze des Steckers 3 zugänglich ist. Der Stecker 3 ist in den klemmbaren Teil 5 des Gehäuses 4 eingeschoben. Beim Aufschrauben der Schraubkappe 6 wird der Stift 7 in das Gehäuse 4 eingedrückt, der wiederum die Druckkörper 8, die hier als Kugeln dargestellt sind, veranlaßt, den klemmbaren Teil 5 zusammenzudrücken und damit den Stecker 3 zu zentrieren und festzuhalten. Das Gehäuse 4 ist mit der abweichend gestalteten Schraubkappe 9 in einem Durchbruch des Gerätegehäuses 10 befestigt. Vor der aus dem Gerätegehäuse 10 herausragenden Fläche des Gehäuses 4 ist innerhalb der Schraubkappe 9 der Druckring 11 beweglich angeordnet. Beim Einsetzen des Gerätegehäuses 10 in den Einschubrahmen oder das Einschubgestell mit dem später beschriebenen darin angeordneten Teil der Koppelvorrichtung trifft der Druckring 11 auf den zylindrischen Teil einer Druckhülse, durch welche der Druckring 11 gegen den Stift 7a gedrückt wird, der seinerseits die Druckkörper 8a zur Zentrierung und Befestigung eines in die Aufnahmeöffnung 12 eingesetzten, ebenfalls später beschriebenen Steckerstiftes veranlaßt. Die Außenfläche 13 des Druckrings 11 ist als Kugelabschnitt geformt, um eine möglichst weitgehende Bewegbarkeit des Druckrings 11 innerhalb der Schraubkappe 9 sicher zu stellen. Die Einführungsöffnung 14 der Schraubkappe 9, durch die die bereits genannte Druckhülse eingeführt wird, ist ebenso wie die Einführungsöffnung 15 des Druckrings 11 und der Mund der Einführungsöffnung 12 des Gehäuses 4 konisch gestaltet. Diese Gestaltung ermöglicht es, auch beim verkanteten Einsetzen des Gerätegehäuses 10 in den später zu beschreibenden Einschubrahmen den genannten Steckerstift sicher zu erfassen und in die Einführungsöffnung 12 einzuführen. Die Zentrier- und Klemmfunktion der Druckkörper 8 und 8a und des klemmbaren Teiles 5 des Gehäuses 4 ist im Stand der Technik ausführlich beschrieben und braucht hier deshalb nicht wiederholt werden.

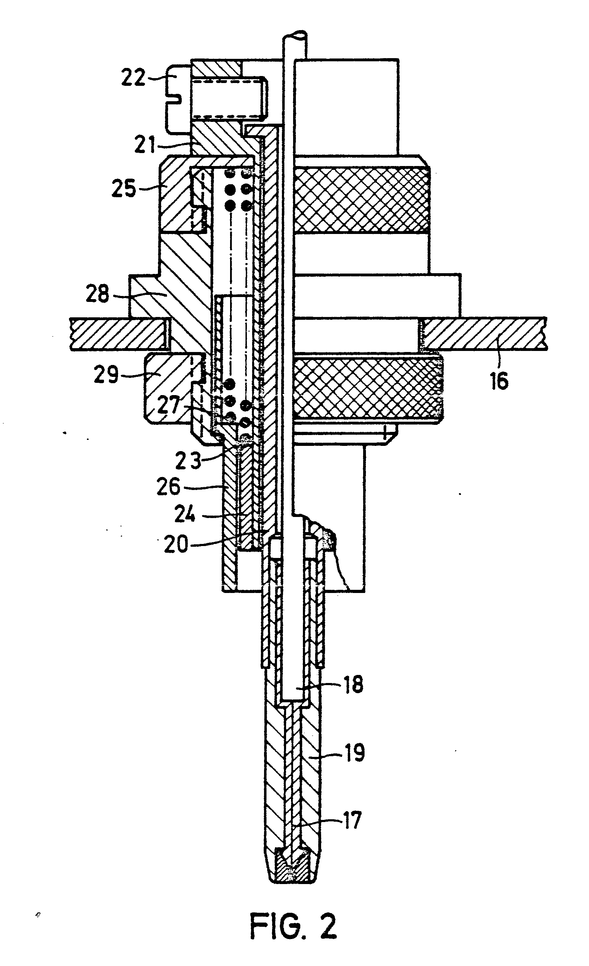

In Fig. 2 ist der in einem Einschubrahmen oder -Gestell befestigte Teil der Koppelvorrichtung, ebenfalls in vergrößertem Maßstab und um 90° gegen seine normale Gebrauchslage gedreht dargestellt. Durch einen Durchbruch des Einschubrahmens 16 ist der LWL 17 mit seiner Kunststoffummantelung 18, gefaßt in einen Stecker 19 mit Verlängerungshülse 20, eingeführt. Die Verlängerungshülse 20 sitzt in einer Steckerhülse 21 und ist darin durch die Schraube 22 derart gegen Herausfallen gesichert, daß sie sich frei drehen kann. Auf die Steckerhülse 21 wird die Schraubkappe 25 und die Druckfeder 23 aufgeschoben und durch die Preßhülse 24 gesichert. Darüber wird die Druckfeder 27 angeordnet und die Druckhülse 26 aufgeschoben. Danach werden diese Teile in das Gegengehäuse 28 eingesetzt und mit diesem durch die Schraubkappe 25 derart verbunden, daß sie federnd gegeneinander verschiebbar sind. Das Gegengehäuse 28 ist im Durchbruch des Einschubrahmens 16 mit der Schraubkappe 29 befestigt.

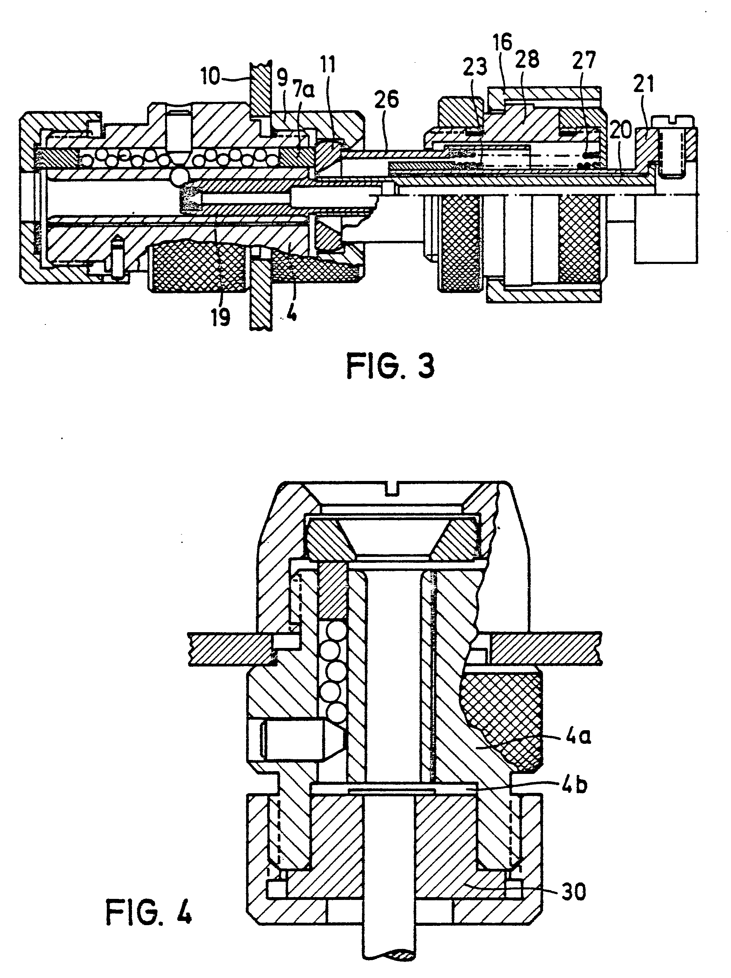

In Fig. 3 ist die gesamte Koppelvorrichtung in einem gegenüber den vorherigen Figuren kleineren Maßstab in der üblichen Gebrauchslage dargestellt. Es ist erkennbar, daß der Steckerstift 19 in der Aufnahmeöffnung des Gehäuses 4 etwa in der Position angelangt ist, in der er auf den jetzt nicht dargestellten Gegenstecker 3 treffen würde. Das Gegengehäuse 28 ist gegen den Druck der Feder 23 weiter bewegt worden, so daß diese Feder 23 bereits zusammengedrückt ist und einen bestimmten Druck auf die Spitze des Steckerstiftes 19 ausübt. Die Druckhülse 26 ist durch die Schraubkappe 9 hindurch auf den Druckring 11 gestoßen, der nun über den Stift 7a die Druckkörper im Gehäuse 4 zusammenschiebt. Bis zu diesem Zeitpunkt ist der Steckerstift 19 frei in der Steckerhülse 21 drehbar. Es ist weiterhin erkennbar, daß das Gerätegehäuse 10 noch ein ganzes Stück auf das im Einschubrahmen 16 befestigte Gegengehäuse 28 hin bewegt werden kann, ohne daß irgendwelche Teile beschädigt werden. Danach folgt dann die für Einschubgeräte übliche Verriegelung im Einschubrahmen.

In Fig. 4 ist eine Ausgestaltung des für Einschubgeräte bestimmten Teiles der Koppelvorrichtung, bei dem die Aufnahmeöffnung 4b des Gehäuses 4a so weit erweitert worden ist, daß ein optoelektronisches Bauteil 30 aufgenommen werden kann. Diese Anordnung empfiehlt sich, wenn Lichtsender oder Lichtempfänger im Einschubgehäuse enthalten sind, die mit einem aus dem Einschubrahmen kommenden LWL verbunden werden sollen. Damit kann eine Steckerverbindung erspart werden, was die Übertragungs-Eigenschaften der Anlage weiter verbessert. In Fig. 4 ist auch die aus dem Geräte-Gehäuse herausragende Schraubkappe an ihrer Außenfläche nicht gerändelt, sondern glatt und zur Einführungsseite hin konisch dargestellt, was für bestimmte Einschub-Bauarten von Vorteil sein kann. In solchem Fall empfiehlt es sich, zur sicheren Befestigung der Schraubkappe, wie ebenfalls dargestellt, auf der Einführungsseite einen Schlitz für Schraubendreher einzuformen.

## Patentansprüche

1. Koppelvorrichtung für in Steckerstifte (3 und 19) gefaßte Lichtwellenleiter (1 und 17), bestehend aus einem in einem Durchbruch eines Gerä-

tegehäuses (10) befestigten, mehrfach geschlitz-ten, Druckkörper (8 und 8a) enthaltenden Gehäuse (4) für die Aufnahme der Steckerstifte (3 und 19) mit wenigstens einer Schraubkappe (9), und einem, in einem Einschubrahmen (16) befestigten Gegengehäuse (28) mit einem darin verschiebbar angeordnetem Steckerstift (19), dadurch gekennzeichnet, daß

a) vor der aus dem Gerätegehäuse (10) herausragenden Stirnfläche des Gehäuses (4) innerhalb der Schraubkappe (9) ein auf die Druckkörper (8a) einwirkender Druckring (11) verschiebbar angeordnet ist, daß

b) im Gegengehäuse (28) eine Druckhülse (26) federnd verschiebbar angeordnet ist, die beim Einschieben des Gerätegehäuses (10) in den Einschubrahmen (16) auf den Druckring (11) trifft, und daß

c) konzentrisch in der Druckhülse (26) eine den Steckerstift (19) aufnehmende Steckerhülse (21) federnd verschiebbar angeordnet ist.

2. Koppelvorrichtung nach Anspruch 1, dadurch gekennzeichnet, daß die Außenfläche (13) des Druckringes (11) für größtmögliche Bewegungsfreiheit innerhalb der Schraubkappe (9) als Kugelzone geformt ist.

3. Koppelvorrichtung nach Anspruch 1 oder 2, dadurch gekennzeichnet, daß die Spitze des Steckerstiftes (19), der Eingang der Aufnahmeöffnung (12) im Gehäuse (4), die Innenfläche (15) der Aufnahmeöffnung des Druckringes (11) und die Öffnung (14) der Schraubkappe (9) konisch geformt sind.

4. Koppelvorrichtung nach einem der Ansprüche 1 bis 3, dadurch gekennzeichnet, daß der Steckerstift (19) in der Steckerhülse (21) frei drehbar angeordnet ist.

5. Koppelvorrichtung nach einem der Ansprüche 1 bis 4, dadurch gekennzeichnet, daß die im Inneren des Gerätegehäuses (10) liegende Einführungsbohrung (4b) im Gehäuse (4a) derart erweitert ist, daß sie ein optoelektrisches Sende- oder Empfangsbauteil (30) aufnehmen kann.

## Claims

1. A coupling device for optical waveguides (1 and 17) mounted in connector pins (3 and 19), comprising a multiply slotted housing (4) for accommodating the connector pins (3 and 19), said housing being secured in a passage in an apparatus housing (10) and comprising pressing bodies (8 and 8a) and at least one screw cap (9), and also comprising a further housing (28) which is secured in a rack (16) and which comprises a connector pin (19) which is arranged so as to be slidable therein, characterized in that

a) in front of the end face of the housing (4) which projects from the apparatus housing (10), inside the screw cap (9), there is slidably arranged a pressing ring (11) which acts on the pressing bodies (8a),

b) inside the further housing (28) a pressing sleeve (26) is arranged so as to be resiliently slidable, which pressing sleeve engages the pressing ring (11) when the apparatus housing (10) is slid into the rack (16),

c) a connector sleeve (21) for accommodating the connector pin (19) is concentrically arranged in the pressing sleeve (26) so as to be resiliently slidable.

2. A coupling device as claimed in Claim 1, characterized in that the outer surface (13) of the pressing ring (11) is shaped as a spherical zone in order to achieve as much freedom of movement as possible inside the screw cap (9).

3. A coupling device as claimed in Claim 1 or 2, characterized in that the tip of the connector pin (19), the entrance of the opening (12) in the housing (4), the inner surface (15) of the opening of the pressing ring (11) and the opening (14) of the screw cap (9) are shaped so as to be conical.

4. A coupling device as claimed in any one of the Claims 1 to 3, characterized in that the connector pin (19) is arranged in the connector sleeve (21) so as to be freely rotatable therein.

5. A coupling device as claimed in any one of the Claims 1 to 4, characterized in that the inlet opening (4b) in the housing (4a) which is situated inside the apparatus housing (10) is widened so that it can accommodate an opto-electric transmitter or receiver component (30).

## Revendications

1. Dispositif de couplage de guides d'ondes lumineuses (1 et 17) montés dans des broches de fiche (3 et 19), constitué, d'une part, par un boîtier (4) à plusieurs fentes fixé dans une ouverture d'un coffret d'appareil (10) et contenant des corps de pression (8 et 8a), boîtier qui sert à recevoir des broches de fiche (3 et 19) et qui est muni d'au moins un bouchon fileté (9) et, d'autre part, par un contre-boîtier (28) fixé dans un cadre de rack (16) et muni d'une broche de fiche (19) pouvant être déplacé dans celui-ci, caractérisé en ce que

a) avant la face frontale de boîtier (4) dépassant du coffret d'appareil (10), une bague de pression (11) agissant sur les corps de pression (8a) est disposée à coulissement dans le bouchon fileté (9), en ce que

b) dans le contre-boîtier (28), est disposé à coulissement élastique un manchon de pression (26) qui lors de l'enfichage du coffret d'appareil (10) dans le cadre (16) de rack, bute contre la bague de pression (11) et en ce que

c) dans le manchon de pression (26), est disposée à coulissement élastique une douille de fiche concentrique (21) recevant la broche de fiche (19).

2. Dispositif de couplage selon la revendication 1, caractérisé en ce que la face extérieure (13) de la bague de pression (11) a la forme d'une zone de sphère pour permettre la plus grande liberté de mouvement dans le bouchon fileté (9).

3. Dispositif de couplage selon la revendication 1 ou 2, caractérisé en ce que la pointe de la broche de fiche (19), l'entrée de l'ouverture de réception (12) dans le boîtier (4), la face intérieure (15) de l'ouverture de réception de la bague de pression (11) et l'ouverture (14) du bouchon fileté (9) sont coniques.

4. Dispositif de couplage selon les revendications 1 à 3, caractérisé en ce que la broche de fiche (19) est disposée dans la douille de fiche (21) de façon à pouvoir tourner librement.

5. Dispositif de couplage selon l'une des revendications 1 à 4, caractérisé en ce que l'alésage d'introduction (4b) pratiqué dans le boîtier (4a) et situé à l'intérieur du coffret d'appareil (10) a été élargi de façon à pouvoir recevoir un composant opto-électronique d'émission ou de réception (30).

FIG. 1

FIG. 2

FIG. 3

FIG. 4

3